Europäisches Patentamt

European Patent Office

Office européen des brevets

(11) Veröffentlichungsnummer: **0 244 559**
**B1**

## (12) EUROPÄISCHE PATENTSCHRIFT

(45) Veröffentlichungstag der Patentschrift:
**11.10.89**

(21) Anmeldenummer: **87101364.5**

(22) Anmeldetag: **02.02.87**

(51) Int. Cl.⁴: **G01D 5/16, B41J 3/04**

(54) Vorrichtung zur Überwachung des Tintenvorrates in Tintenschreibeinrichtungen.

(30) Priorität: **04.02.86 DE 3603333**

(43) Veröffentlichungstag der Anmeldung:
**11.11.87 Patentblatt 87/46**

(45) Bekanntmachung des Hinweises auf die Patenterteilung:
**11.10.89 Patentblatt 89/41**

(84) Benannte Vertragsstaaten:
**CH DE ES FR GB IT LI NL SE**

(56) Entgegenhaltungen:
**DE-A- 3 322 825**
**FR-A- 2 395 149**
**GB-A- 2 072 851**
**US-A- 3 976 860**

(73) Patentinhaber: **Siemens Aktiengesellschaft,**
**Wittelsbacherplatz 2, D-8000 München 2(DE)**

(72) Erfinder: **Lichti, Reiner, Dipl.-Ing. (FH),**
**Kerschensteinerstrasse 228, D-8034 Germering(DE)**

ACTORUM AG

**Beschreibung**

Die Erfindung betrifft eine Vorrichtung zur Überwachung des Vorrats von elektrisch leitender Schreibflüssigkeit in einem Vorratsbehälter für Tintenschreibeinrichtungen gemäß dem Oberbegriff des Patentanspruches 1.

Bei Schreibeinrichtungen, die als Schreibmedium Tinte benutzen, wird im allgemeinen dem durch eine motorische Einrichtung entlang einem Aufzeichnungsträger bewegbaren Schreibkopf über eine Versorgungsleitung aus einem Tintenvorratsbehälter Schreibflüssigkeit zugeführt. Ist dabei der Tintenvorratsbehälter in den Schreibkopf integriert, so bewegt sich dieser gemeinsam mit dem Schreibkopf und eine visuelle Überwachung des Tintenvorrates im Behälter ist nicht möglich. Für eine sichere Funktion des Tintenschreibwerkes ist aber eine ständige Überwachung des Tintenvorrates, insbesondere beim Einsatz von solchen Schreibeinrichtungen im Fernschreib- und Datenverkehr notwendig.

Aus der DE-PS 27 28 283 ist eine Vorrichtung zur Überwachung des Vorrats an elektrisch leitender Schreibflüssigkeit für Tintenschreibeinrichtungen bekannt. Bei dieser Vorrichtung wird zur Vorratsmessung die Leitfähigkeit der Tinte ausgenützt. Hierzu werden drei Meßelektroden in zwei durch einen Steg abgetrennte Mulden eines Tintenvorratsbehälters eingebracht und über eine Meßbrücke wird der elektrische Widerstand zwischen den Elektroden erfaßt. Zwei Elektroden, die sich in derselben Mulde des Vorratsbehälters befinden, dienen dabei zur Erfassung eines flüssigkeitsspezifischen Vergleichswiderstandes und zwei Elektroden, die in verschiedenen Mulden angeordnet sind, dienen zur Erfassung des sich in Abhängigkeit vom Flüssigkeitsstand ändernden Widerstandes. Um eine Zersetzung der Tinte (Elektrolyse) zu vermeiden, werden Rechteckimpulse eines Impulsgenerators über einen Kondensator als nullsymmetrische Wechselspannung einer Meßbrücke zugeführt, wobei ein Zweig aus den zu fassenden Tintenwiderständen und deren anderer Zweig aus Festwiderständen bestehen und dann an ein Bewertungsschaltmittel und ein Schaltmittel mit Schwellwertverhalten weitergeleitet, das bei Unterschreiten eines einem bestimmten Vorratsvolumen entsprechenden Vergleichswertes ein Ausgangssignal für eine Anzeigevorrichtung abgibt.

Diese Tintenvorratsüberwachung mit Hilfe einer Wechselstrombrückenschaltung und anschließender Mittelwertbildung ist relativ aufwendig und eine zusätzliche Messung des "Tintenvorendes" erhöht den Schaltungsaufwand erheblich.

Aufgabe der Erfindung ist es, für Tintenschreibeinrichtungen oder ähnliche mit elektrisch leitender Schreibflüssigkeit arbeitende Schreibeinrichtungen eine Vorrichtung zur Überwachung des Schreibflüssigkeitsvorrates bereitzustellen, die einfach und funktionssicher arbeitet und kostengünstig herstellbar ist.

Diese Aufgabe wird bei einer Vorrichtung der eingangs genannten Art durch die im kennzeichnenden Teil des Patentanspruches 1 genannten Merkmale gelöst.

Vorteilhafte Weiterbildungen der Erfindung sind in den abhängigen Ansprüchen angegeben.

Ein Vorteil der Erfindung liegt darin, daß durch die Verwendung eines kurzen Gleichspannungsimpulses zur Spannungsmessung an den Elektroden der Füllgrad des Vorratsbehälters besonders einfach ermittelt werden kann. Durch Anlegen von Gleichstromimpulsen gleicher Dauer und Amplitude derart, daß während des Meßvorganges an der einen Elektrode "High"-Pegel und an der anderen Elektrode "Low"-Pegel und anschließend jeweils die invertierten Pegel anliegen, ist der zeitliche Mittelwert der Spannung zwischen den Elektroden Null. Damit wird eine Zersetzung der Tinte und der Elektroden durch Elektrolyse vermieden. Die Spannungsmessung kam dabei sowohl während des "High"-Pegels als auch während des "Low"-Pegels erfolgen.

Da die Meßwerte zur Bestimmung des Flüssigkeitspegels des Tintenvorratsbehälters statischen und dynamischen Schwankungen unterliegen, wird aus einer Mehrzahl aufeinanderfolgender Meßwerte eine Mittelwertbildung durchgeführt, wodurch eine zuverlässige Tintenende-Erkennung sichergestellt ist.

Ein Ausführungsbeispiel der Erfindung ist in den Zeichnungen dargestellt und wird im folgenden näher beschrieben. Es zeigt

Fig. 1 ein Prinzipschaltbild der Vorrichtung zur Erfassung des Flüssigkeitspegels von Tintenvorratsbehältern und

Fig. 2 a) und b) zeitliche Verläufe der den Elektroden des Tintenvorratsbehälters zugeführten Gleichspannungsimpulse.

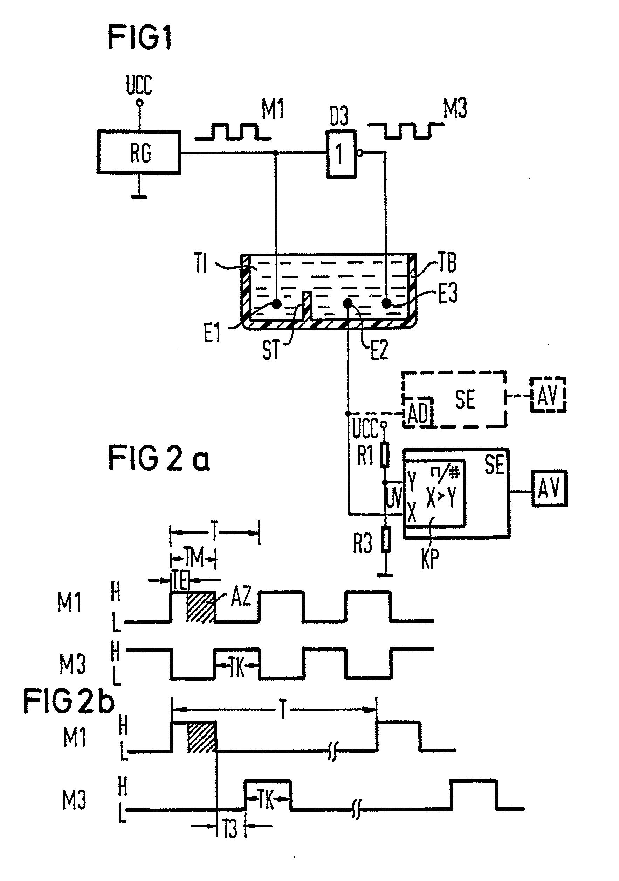

Eine hier nicht dargestellte Tintenschreibeinrichtung enthält einen entlang eines Aufzeichnungsträgers beweglichen Schreibkopf, der über eine Versorgungsleitung aus einem in Fig. 1 dargestellten Tintenvorratsbehälter TB gespeist wird, wobei der Tintenvorratsbehälter TB drei Elektroden E1, E2, E3 enthält. Der Aufbau eines solchen Vorratsbehälters TB, sowie die Anordnung der Elektroden E1, E2, E3 kann in der aus der DE-PS 27 28 283 bekannten Weise erfolgen. Die im Boden des Vorratsbehälters TB angeordneten Elektroden E1, E2, E3 dienen zur Bestimmung des Vorrates an Schreibflüssigkeit TI im Vorratsbehälter TB. Der Widerstand der Schreibflüssigkeit TI zwischen den Elektroden E2 und E3 (flüssigkeitsspezifischer Vergleichswiderstand) ändert sich mit der Temperatur und der Zusammensetzung der Schreibflüssigkeit TI in gleicher Weise wie der zwischen den Elektroden E1 und E2 gemessene Meßwiderstand. Bei vollem Tintenvorratsbehälter TB ist der Widerstand zwischen den Elektroden E1 und E2 etwa gleich dem Widerstand zwischen den Elektroden E2 und E3. Fällt der Flüssigkeitsspiegel, so steigen beide Widerstände an. Allerdings ist der Anstieg des Widerstandswertes zunächst nur gering und auch die Spannung U2 an der Elektrode E2 ändert sich zunächst nur wenig. Erst bei deutlichem Absinken des Tintenpegels wird der leitfähige Tintenquerschnitt zwischen den Elektroden E1 und E2 durch den dazwischenliegenden Steg ST stark verengt. Der Widerstand zwischen den Elektroden E1 und E2 nimmt deswegen stärker zu, als der Widerstand zwischen den Elektroden E2 und E3, so daß sich die Spannung U2 an der Elektrode E2 ändert.

Zur Messung der Spannung U2 wird ein von einem Rechteckgenerator RG abgegebenes Signal M1 mit z.B. TTL Pegel und einem Pulspausenverhältnis von 1:1 an die Elektrode E1 angelegt. Über einen Inverter D3 wird des Signal M1 invertiert und als Kompensationssignal M3 an die Elektrode E3 geführt.

Durch diese Maßnahme wird der zeitliche Mittelwert der Spannung an den Elektroden Null. Für die Dauer der Messung führt das Signal M1 "High"Pegel und das Kompensationssignal M3 "Low"-Pegel. Die dabei an der Elektrode E2 anliegende Spannung U2, die vom Füllgrad des Vorratsbehälters TB abhängig ist, wird mit Hilfe eines in der Steuerelektronik ES enthaltenen Komparators KP mit einer Vergleichsspannung UV, welche mit Hilfe eines Spannungsteilers R1, R3 aus einer Versorgungsspannung UCC abgeleitet wird, verglichen. Solange sich genügend Schreibflüssigkeit TI im Vorratsbehälter TB befindet, ist die Spannung U2 an der Elektrode E2 größer als die Vergleichsspannung UV. Damit führt die Ausgangsspannung des Komparators "High"-Pegel und eine nachgeschaltete Abschaltvorrichtung AV bleibt inaktiv.

Unterschreitet bei Absinken des Flüssigkeitspegels die Spannung U2 die Vergleichsspannung UV, die durch geeignete Wahl der Widerstände R1, R3 einstellbar ist und einem bestimmten Mindestflüssigkeitsstand im Vorratsbehälter TB entspricht, so führt die Ausgangsspannung des Komparators "Low"-Pegel, was zum Ansprechen der Abschaltvorrichtung AV führt, die beispielsweise optisch und/oder akustisch das Zuendegehen des Tintenvorrates signalisiert und bei fortgesetztem Schreibbetrieb ein Ausgeben von Druckzeichen verhindert.

Die detaillierte Funktionsweise einer auf diesem Prinzip beruhenden Abschaltvorrichtung ist ebenfalls aus der DE-PS 27 28 283 bekannt.

Durch die Wahl der Vergleichsspannung UV kann dadurch sowohl ein Tintenvorende als auch das Tintenende angezeigt werden. Da die an der Elektrode E2 anliegende Spannung U2, also der Meßwert, sowohl statischen (ruhender Tintenvorratsbehälter TB) als auch dynamischen (bewegter Tintenvorratsbehälter TB beim Schreibbetrieb) Schwankungen unterworfen ist, weist die Tintenende-Erkennung vom Prinzip her eine gewisse Unschärfe auf. So liegt der typische Spannungsunterschied $\Delta$ U2 zwischen der bei einem vollen Tintenvorratsbehälter TB und der bei einem leeren Behälter TB gemessenen Spannung in der Größenordnung von etwa 270 mV. Die dynamischen Schwankungen des Meßwertes während der Wagenbewegung können dagegen mehr als 800 mV (typisch) betragen.

Vor allem bei leer werdendem Tintenvorratsbehälter TB kann der Meßwert zwischen "Voll" und "Leer" schwanken. Um dennoch zu einer zuverläs-sigen Tintenende-Erkennung zu gelangen, wird eine Mittelwertbildung von mehreren Messungen durchgeführt. Hierzu wird eine Anzahl von n Abfragen (Ausgangssignale des Komparators KP) in der Steuerelektronik ES gespeichert. Entspricht bei n Abfragen die eine Anzahl $m \leq n/2$ dem Meßwert "Low"-Pegel, so wird mit "Tintenende" bewertet, bei einer Anzahl von Meßwerten $m>n/2$, die "High"-Pegel führen, wird entsprechend "Tinte vorhanden" bewertet.

Die Auswertung der Spannung U2 kann anstelle des Komparator SKP auch durch einen Analog-Digital-Wandler AD der Steuerelektronik SE für die Schreibeinrichtung erfolgen (gestrichelte Darstellung in Fig. 1).

Dabei werden die n-Meßwerte für die Spannung U2 in der Steuerungselektronik ES nach der A/D-Wandlung digital gespeichert.

Um auch hier eine zuverlässige Tintenende-Erkennung zu erhalten, wird ebenfalls eine Mittelwertbildung, hier aber mit Hilfe der Steuerelektronik SE durchgeführt.

Dazu wird der neue Meßwert $X_n$ mit dem alten Mittelwert $X_m$ gemittelt: $X_{n'} = (X_m + X_n) / 2$. Dann wird dieser neue Mittelwert $X_{n'}$ mit dem alten Mittelwert $X_m$ noch einmal gemittelt: $X_{n''} = (X_m + X_{n'}) / 2$, usw. . Dieses Verfahren wird mehrmals wiederholt, damit jeder neue Meßwert nur einen geringen Einfluß auf den Mittelwert hat.

Um stets eine Aussage über den aktuellen Flüssigkeitsvorrat TI im Tintenvorratsbehälter TB zu erhalten, wird die Tintenendeabfrage durch Messung der Spannung U2 während aller möglichen Betriebszustände der Schreibeinrichtung durchgeführt.

Es werden sowohl nach der Initialisierung, nach einem Wechsel des Vorratsbehälters TB, im Stand-By-Betrieb, vor Schreibbeginn, als auch während des Schreibbetriebes Meßwerte abgefragt. Während des Schreibens muß die Messung zu einem Zeitpunkt vorgenommen werden, bei dem sie nur unwesentlich durch dynamische Schwankungen des Meßwertes U2 und/oder durch Übersprechen von Ansteuerimpulsen für das Schreibwerk beeinflußt. Diese Messung wird deshalb nach dem Schreiben der letzten Spalte einer Zeile durchgeführt und der Mittelwert nach oben angegebenen Verfahren gebildet.

Der mögliche Abfragezeitraum AZ ist in der Fig. 2 a) beim Meßsignal M1 schraffiert dargestellt. Das Meßsignal M1 führt während der Dauer TM "High"-Potential, während das Kompensationssignal M3 "Low"-Potential führt. Das Pulspausenverhältnis beider Impulse ist dabei 1. Nach einer gewissen Einschwingdauer TE ist der Meßwert stabil und er kann abgefragt werden. Um eine Zersetzung der Tinte durch Elektrolyse zu vermeiden, weisen die beiden Impulse M1, M3 gleiche Dauer TM, TK und gleiche Amplituden auf, so daß der zeitliche Mittelwert über eine Periode Null ist.

Da aber in der Praxis der Portausgang des Rechteckgenerators RG bzw. der Inverter D3 verschiedene Restspannungen aufweisen können, was sich in geringfügig unterschiedlichen Amplituden der Signale M1, M3 und damit ein von Null verschiedenes Potential an den Elektroden auswirkt, wird die Dauer TM, TK der Impulse M1, M3 auf einen kurzen Wert beschränkt, beispielsweise 100 µs.

In Fig. 2b) ist eine weitere Impulssequenz mit einem Impulspausenverhältnis 1 dargestellt, bei welcher der Kompensationsimpuls M3 erst nach einer gewissen Zeitdauer T3 nach dem Meßimpuls M1 an die Elektrode E3 gelegt wird. Auch hier weisen während des Abfragezeitraumes AZ die Impulse M1, M3 entgegengesetztes Vorzeichen auf und der zeitliche Mittelwert über eine Periode T ist Null. Die Periodendauer T der Gleichspannungsimpulse beim Schreibbetrieb entspricht dabei der Zeit zum Bedrucken einer Zeile.

Typische Werte für die Impulssequenzen sind:
Meßimpulse, Kompensationsimpulse: TM = TK = 50 µsec.
Abstand/Meß/Kompensationsimpuls: T3 = 10 µsec.
Einschwingzeit: TE = 2 µsec.
Periodendauer Druckbetrieb: T ≠ Zeile
Periodendauer Initialisierung : T = 1 msec.

Zur Überwachung des Tintenvorrates in Druckeinrichtungen, die Mehrfarbendruck erlauben, ist es nötig, alle Vorratsbehälter hinsichtlich des Pegelstandes der Tinten zu überwachen. Dabei ist für jede Farbe eine eigene Meßwerterfassung und Auswerteschaltung vorhanden und die Ausgänge der Komparatoren sind zu einer einzigen "Tinteendemeldung" zusammengefaßt.

**Patentansprüche**

1. Vorrichtung zur Überwachung des Vorrats von elektrisch leitender Schreibflüssigkeit (TI) in einem Vorratsbehälter (TB) für Tintenschreibeinrichtungen oder ähnlichen Schreibeinrichtungen unter Verwendung von drei Elektroden zur Widerstandsmessung, wobei ein Elektrodenpaar (E2, E3) in einem ständig von Schreibflüssigkeit (TI) benetzten Bereich des Vorratsbehälters (TB) angeordnet ist und zur Erfassung eines flüssigkeitsspezifischen Vergleichswiderstandes und eine weitere Elektrode (E1) zusammen mit einer der Elektroden des Elektrodenpaares (E2, E3) zur Erfassung des sich in Abhängigkeit vom Flüssigkeitspegel verändernden Widerstandes dient und diese Meßwerte einer Bewertungsanordnung zugeführt werden, die abhängig vom Pegelstand der Schreibflüssigkeit (TI) eine Anzeigeeinrichtung (AV) ansteuert, **dadurch gekennzeichnet, daß** die Messung über Gleichspannungsimpulse (M1, M3) dadurch erfolgt, daß die weitere Elektrode (E1) mit einem Meßimpuls (M1) und die entsprechende Elektrode (E3) des Elektrodenpaares (E2, E3) mit einem Kompensationsimpuls (M3) mit gleicher Amplitude und invertiertem Pegel beaufschlagt werden, wodurch an der anderen Elektrode (E2) des Elektrodenpaares (E2, E3) eine dem Füllgrad des Vorratsbehälters (TB) zugeordnete Spannung (U2) abgreifbar ist.

2. Vorrichtung nach Anspruch 1, **dadurch gekennzeichnet, daß** für die Dauer der Spannungsmessung (U2) der Meßimpuls (M1) an der Elektrode (E1) "High"-Potential und der Kompensationsimpuls (M3) an der Elektrode (E3) "Low"-Potential aufweist.

3. Vorrichtung nach Anspruch 1, **dadurch gekennzeichnet, daß** für die Dauer der Spannungsmessung (U2) der Meßimpuls (M1) an der Elektrode (E1) "Low"-Potential und der Kompensationsimpuls (M3) an der Elektrode (E3) "High"-Potential aufweist.

4. Vorrichtung nach Anspruch 1, **dadurch gekennzeichnet, daß** die Dauer (TM) des Meßimpulses (M1) gleich der Dauer (TK) des Kompensationsimpulses (M3) ist.

5. Vorrichtung nach einem der vorhergehenden Ansprüche, **dadurch gekennzeichnet, daß** der Kompensationsimpuls (M3) innerhalb der Periode (T) des Meßimpulses (M1) liegt.

6. Vorrichtung nach Anspruch 1, **dadurch gekennzeichnet, daß** aus einer Mehrzahl aufeinanderfolgender Messungen für die Spannung (U2) ein Mittelwert gebildet wird und die Größe dieses Mittelwertes als Kriterium für die Aktivierung einer Anzeigevorrichtung (AV) bezüglich des Füllstandes des Tintenvorratsbehälters (TB) benützt wird.

7. Vorrichtung nach Anspruch 2, **dadurch gekennzeichnet, daß** die Spannung (U2) in einem Komparator (KP) mit einer Vergleichsspannung (UV) verglichen und bei Unterschreiten dieser Vergleichsspannung (UV) die Anzeigevorrichtung (AV) aktiviert wird.

8. Vorrichtung nach Anspruch 3, **dadurch gekennzeichnet, daß** die Spannung (U2) in einem Komparator (KP) mit einer Vergleichsspannung (UV) verglichen und bei Überschreiten dieser Vergleichsspannung (UV) die Anzeigevorrichtung (AV) aktiviert wird.

9. Vorrichtung nach Anspruch 1, **dadurch gekennzeichnet, daß** zur Auswertung des Füllstandes des Tintenvorratsbehälters (TB) die Spannung (U2) einem Analogeingang eines Analog-Digital-Wandlers (AD) der Steuerelektronik (SE) der Schreibeinrichtung zugeführt wird, die bei Unterschreiten eines Mindestwertes für die Spannung (U2) die Anzeigevorrichtung (AV) aktiviert.

10. Vorrichtung nach Anspruch 3, **dadurch gekennzeichnet, daß** die Auswertung des Füllstandes des Tintenvorratsbehälters (TB) die Spannung (U2) einem Analogeingang eines Analog-Digital-Wandlers (AD) der Steuerelektronik (SE) der Schreibeinrichtung zugeführt wird, die bei Überschreiten eines Mindestwertes für die Spannung (U2) die Anzeigevorrichtung aktiviert.

11. Vorrichtung nach einem der vorhergehenden Ansprüche, **dadurch gekennzeichnet, daß** sie zur Überwachung von mehreren Vorratsbehältern (TB) für verschiedene farbige Schreibflüssigkeiten (TI) in Farbdruckeinrichtungen dient, wobei für jede Schreibflüssigkeit (TI) eine eigene Auswerteschaltung (KP) vorgesehen ist und die Ausgänge dieser Auswerteschaltungen (KP) zu einer gemeinsamen Anzeigevorrichtung (AV) zusammengefaßt sind.

12. Vorrichtung nach Anspruch 1, **dadurch gekennzeichnet, daß** die Abfrage der Meßwerte (U2) durch Anliegen der Impulse (M1, M3) sowohl nach der Initialisierung, nach einem Wechsel des Tintenvorratsbehälters (TB), im Stand-By-Betrieb der Schreibeinrichtung als auch während des Schreibvorganges selbst erfolgt.

13. Vorrichtung nach Anspruch 10, **dadurch gekennzeichnet,** daß während des Schreibvorganges der Meßwert (U2) einmal pro Zeile nach dem Schreiben der letzten Spalte einer Zeile abgefragt wird.

## Claims

1. Apparatus for monitoring the supply of electrically conductive recording fluid (TI) in a reservoir (TB) for ink-jet recording devices or similar recording devices, with use of three electrodes for resistance measurement, one electrode pair (E2, E3) being arranged in an area of the reservoir (TB) constantly wetted by the recording fluid (TI) and, for sensing a liquid-specific comparison resistance, a further electrode (E1) serving together with one of the electrodes of the electrode pair (E2, E3) for the sensing of the resistance varying in dependence on the fluid level and these measured values being fed to an assessment arrangement, which actuates a display device (AV) depending on the level of the recording fluid (TI), characterized in that the measurement is performed via direct-voltage pulses (M1, M3) by the further electrode (E1) having applied to it a measuring pulse (M1) and the corresponding electrode (E3) of the electrode pair (E2, E3) having applied to it a compensation pulse (M3) of the same amplitude and inverted level, as a result of which a voltage (U2) assigned to the degree of filling of the reservoir (TB) is able to be picked up at the other electrode (E2) of the electrode pair (E2, E3).

2. Apparatus according to Claim 1, characterized in that, for the duration of the voltage measurement (U2), the measuring pulse (M1) at the electrode (E1) has "high" potential and the compensation pulse (M3) at the electrode (E3) has "low" potential.

3. Apparatus according to Claim 1, characterized in that, for the duration of the voltage measurement (U2), the measuring pulse (M1) at the electrode (E1) has "low" potential and the compensation pulse (M3) at the electrode (E3) has "high" potential.

4. Apparatus according to Claim 1, characterized in that the duration (TM) of the measuring pulse (M1) is equal to the duration (TK) of the compensation pulse (M3).

5. Apparatus according to one of the preceding claims, characterized in that the compensation pulse (M3) lies within the period (T) of the measuring pulse (M1).

6. Apparatus according to Claim 1, characterized in that a mean is formed from a multitude of successive measurements for the voltage (U2) and the size of this mean is used as criterion for the activation of a display device (AV) with respect to the filling level of the ink reservoir (TB).

7. Apparatus according to Claim 2, characterized in that the voltage (U2) is compared in a comparator (KP) with a comparison voltage (UV) and, if this comparison voltage (UV) is not reached, the display device (AV) is activated.

8. Apparatus according to Claim 3, characterized in that the voltage (U2) is compared in a comparator (KP) with a comparison voltage (UV) and, if this comparison voltage (UV) is exceeded, the display device (AV) is activated.

9. Apparatus according to Claim 1, characterized in that, for evaluation of the filling level of the ink reservoir (TB), the voltage (U2) is fed to an analog input of an analog/digital converter (AD) of the control electronics (SE) of the recording device, which activates the display device (AV) if a minimum value for the voltage (U2) is not reached.

10. Apparatus according to Claim 3, characterized in that, for evaluation of the filling level of the ink reservoir (TB), the voltage (U2) is fed to an analog input of an analog/digital converter (AD) of the control electronics (SE) of the recording device, which activates the display device, if a minimum value for the voltage (U2) is exceeded.

11. Apparatus according to one of the preceding claims, characterized in that it serves for the monitoring of a plurality of reservoirs (TB) for various coloured recording fluids (TI) in colour printing devices, an own evaluation circuit (KP) being provided for each recording fluid (TI) and the outputs of these evaluation circuits (KP) being combined to form a common display device (AV).

12. Apparatus according to Claim 1, characterized in that the inquiry of the measured values (U2) is performed by applying the pulses (M1, M3) both after initialization, after a change of the ink reservoir (TB), in standby mode of the recording device and also during the recording operation itself.

13. Apparatus according to Claim 10, characterized in that, during the recording operation, the measured value (U2) is inquired once per line after recording the final column of a line.

## Revendications

1. Dispositif pour contrôler une réserve d'une encre (TI) électriquement conductrice dans un réservoir (TB) pour des dispositifs d'écriture à l'encre ou des dispositifs d'écritures semblables, moyennant l'utilisation de trois électrodes servant à mesurer une résistance, et dans lequel un couple d'électrodes (E2, E3) est disposé dans une zone du réservoir (TB) mouillée en permanence par l'encre (TI) et sert à déterminer une résistance de référence spécifique à l'encre et une autre électrode (E1) sert, conjointement avec l'une des électrodes du couple d'électrodes (E2, E3) à déterminer la résistance, qui varie en fonction du niveau de l'encre, ces valeurs de mesure étant envoyées à un dispositif d'évaluation, qui commande un dispositif d'affichage (AV), en fonction du niveau de l'encre (TI), caractérisé en ce que la mesure est exécutée au moyen d'impulsions de tension continue (M1, M3), que l'autre électrode (E1) est chargée par une impulsion de mesure (M1) et que l'électrode correspondante (E3) du couple d'électrodes (E2, E3) est chargée avec une impulsion de compensation (M3) possédant une amplitude identique et un niveau inverse, ce qui permet de prélever, sur l'autre électrode (E2) du couple d'électrodes (E2, E3), une tension (U2) associée au degré de remplissage du réservoir (TB).

2. Dispositif suivant la revendication 1, caractérisé par le fait que, pendant la durée de la mesure de la tension (U2), l'impulsion de mesure (M1) appliquée à l'électrode (E1) possède un potentiel "High" (haut) et l'impulsion de compensation (M3) appliquée à l'électrode (E3) possède un potentiel "Low" (bas).

3. Dispositif suivant la revendication 1, caractérisé par le fait que pendant la durée de la mesure de la tension (U2), l'impulsion de mesure (M1) appliquée à l'électrode (E1) possède un potentiel "Low" et l'impulsion de compensation (M3) appliquée à l'électrode (E3) possède un potentiel "High".

4. Dispositif suivant la revendication 1, caractérisé par le fait que la durée (TM) de l'impulsion de mesure (M1) est égale à la durée (TK) de l'impulsion de compensation (M3).

5. Dispositif selon l'une des revendications précédentes, caractérisé par le fait que l'impulsion de compensation (M3) est présente au cours de la période (T) de l'impulsion de mesure (M1).

6. Dispositif suivant la revendication 1, caractérisé par le fait qu'une valeur moyenne d'une multiplicité de mesures successives de la tension (U2) est formée et que cette valeur moyenne est utilisée comme critère pour l'activation d'un dispositif d'affichage (AV) en rapport avec le niveau de remplissage du réservoir d'encre (TB).

7. Dispositif suivant la revendication 2, caractérisé par le fait que la tension (U2) est comparée à une tension de référence (UV) dans un comparateur (KP) et que, dans le cas d'un dépassement de la tension de référence (UV) par valeurs inférieures, le dispositif d'affichage (AV) est activé.

8. Dispositif suivant la revendication 2, caractérisé par le fait que la tension (U2) est comparée à une tension de référence (UV) dans un comparateur (KP) et que, lors du dépassement de cette tension de référence (UV) par valeurs supérieures, le dispositif d'affichage (AV) est activé.

9. Dispositif suivant la revendication 1, caractérisé par le fait que pour l'évaluation du niveau de remplissage du réservoir d'encre (TB), la tension (U2) est envoyée à une entrée analogique d'un convertisseur analogique/numérique (AD) du système électronique de commande (SE) du dispositif enregistreur, qui active le dispositif d'affichage (AV), lorsque la tension (U2) tombe au-dessous d'une valeur minimale.

10. Dispositif suivant la revendication 3, caractérisé par le fait que pour l'évaluation du niveau de remplissage du réservoir d'encre (TB), la tension (U2) est envoyée à une entrée analogique d'un convertisseur analogique/numérique (AD) du système électronique de commande (SE) du dispositif d'écriture, qui active le dispositif d'affichage lorsque la tension (U2) dépasse une valeur minimale.

11. Dispositif suivant l'une des revendications précédentes, caractérisé par le fait qu'il sert à contrôler plusieurs réservoirs (TB) prévus pour différentes encres colorées (TI) situées dans des dispositifs d'impression en couleurs, auquel cas pour chaque encre (TI), il est prévu un circuit particulier d'évaluation (KP) et les sorties de ces circuits, d'évaluation (KP) sont réunies à un dispositif commun d'affichage (AV).

12. Dispositif suivant la revendication 1, caractérisé par le fait que l'interrogation des valeurs de mesure (U2) est exécutée de façon automatique par application des impulsions (M1, M3), aussi bien après l'initialisation, après un remplacement du réservoir d'encre (TB), dans le fonctionnement du dispositif d'écriture à l'état d'attente que pendant l'opération d'écriture.

13. Dispositif suivant la revendication 10, caractérisé par le fait que, pendant l'opération d'écriture, la valeur de mesure (U2) est interrogée une fois par ligne après l'écriture de la dernière colonne d'une ligne.

FIG1

FIG 2 a

FIG 2b